(19) Europäisches Patentamt

European Patent Office

Office européen des brevets

(11) **EP 1 179 868 A1**

(12) **DEMANDE DE BREVET EUROPEEN**

(43) Date de publication:
**13.02.2002 Bulletin 2002/07**

(51) Int Cl.⁷: **H01M 4/38**, C22F 1/02

(21) Numéro de dépôt: **01402059.8**

(22) Date de dépôt: **30.07.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **10.08.2000 FR 0010526**

(71) Demandeurs:
• **ALCATEL**
  **75008 Paris (FR)**
• **TREIBACHER AUERMET Produktionsges. m.b.H.**
  **9330 Treibach-Althofen (AT)**

(72) Inventeurs:
• **Knosp, Bernard**
  **92250 La Garenne Colombes (FR)**
• **Arnaud, Olivier**
  **33000 Bordeaux (FR)**
• **Hezeque, Thierry**
  **33240 St Andre de Cubzac (FR)**
• **Barbic, Paul**
  **9300 ST Veit/Glan (AT)**
• **Bouvier, Alexander**
  **9201 Krumpendorf am Wörthersee (AT)**

(74) Mandataire: **Sciaux, Edmond et al**
  **COMPAGNIE FINANCIERE ALCATEL Dépt. Propr. Industrielle, 30, avenue Kléber**
  **75116 Paris (FR)**

(54) **Alliage hydrurable**

(57) La présente invention a pour objet une matière électrochimiquement active constituée d'un alliage hydrurable monophasé de structure CaCu5, de formule $Mm\ Ni_a\ Mn_b\ Al_c\ Co_d\ Cr_e$, où Mm est un mischmetal contenant au moins 50% en poids de La, avec $5{,}10 \leq (a+b+c+d+e)$, $d \leq 0{,}55$, $0{,}03 \leq e \leq 0{,}1$.

**Description**

La présente invention se rapporte à une matière électrochimiquement active constituée d'un alliage hydrurable, utilisable dans une électrode négative de générateur secondaire à électrolyte alcalin. Elle s'étend en outre au procédé de fabrication de cet alliage. L'invention se rapporte aussi à l'électrode incluant cette matière active et au générateur électrochimique contenant une électrode dont la matière électrochimiquement active est un alliage hydrurable selon l'invention.

Les accumulateurs nickel-métal hydrurable (Ni-MH) étanches sont des générateurs secondaires à électrolyte alcalin aqueux. Le réactif constitué par l'hydrogène est stocké dans la masse de l'alliage hydrurable qui a la faculté de pouvoir en absorber de grandes quantités. Cet alliage doit pouvoir emmagasiner et restituer l'hydrogène, selon que l'accumulateur est en charge ou en décharge, avec une vitesse suffisante dans les conditions normales de fonctionnement. Il doit également avoir une capacité électrochimique plus élevée que le cadmium, résister à la corrosion dans la potasse, et ne pas être toxique.

A l'heure actuelle, on utilise principalement des alliages hydrurables de type $AB_5$, dérivant de $LaNi_5$. Le composé $LaNi_5$ présente une capacité d'absorption d'hydrogène réversible par voie solide-gaz équivalente à 370mAh/g. Toutefois sa pression de plateau, qui est de l'ordre de 2 bars, est trop élevée pour une utilisation dans une électrode négative d'accumulateur, pour laquelle la pression de plateau doit être comprise entre 0,01 bar et 1 bar. De plus la résistance à la corrosion de cet alliage dans la potasse concentrée est insuffisante.

Afin d'abaisser le coût des alliages de type $LaNi_5$, le lanthane La est généralement remplacé par du mischmetall, désigné par Mm, dont la composition typique est : $La_{0,25 \text{ à } 0,35}$ $Ce_{0,45 \text{ à } 0,55}$ $Nd_{0,10 \text{ à } 0,20}$ $Pr_{0,03 \text{ à } 0,07}$. Pour la même raison, on s'efforce de diminuer la proportion dans l'alliage de certains métaux coûteux, notamment du cobalt. Par exemple, le brevet américain US-5,512,385 propose un alliage hydrurable contenant peu de cobalt. L'alliage comprend au moins deux phases et est représenté par la formule générale $Mm\ Ni_x M_y$ où $5,0 \leq x+y \leq 5,5$ et M est au moins un élément parmi Al, Mn, Co, Cu, Fe, Cr, Zr, Ti et V. L'alliage a par exemple la formule $Mm\ Ni_a\ Al_b\ Mn_c\ Cu_d\ Co_e\ Fe_f\ Cr_g$.

Il est généralement admis que la durée de vie d'un accumulateur nickel-métal hydrurable est limitée par la corrosion en cyclage de l'alliage hydrurable. Pour réduire la corrosion, le brevet américain US-4,487,817 propose un alliage de formule $A\ B_m C_n$ où $4,8 \leq n+m \leq 5,4$. A peut être notamment un mischmetal contenant plus de 50% en poids de Ce, environ 25% en poids de La et environ 25% en poids d'un mélange d'autres Terres rares. B est au moins deux éléments parmi Ni, Co, Cu, Fe et Mn, et C est au moins un élément dans une proportion atomique particulière choisi parmi Al (0,05-0,6), Cr (0,05-0,5) et Si (0,05-0,5).

Un alliage ayant une longue durée de vie en cyclage dans une large plage de température est proposé par le brevet américain US-5,753,386. Cet alliage est représenté par la formule générale: $A\ Ni_a\ M_b\ M'_c\ T_d$ où A est un mischmetal comprenant La (50-70% pds), Ce (1-30% pds), Pr (0-10% pds), Nd (0-10% pds) et Y (0-10% pds). M est au moins un élément parmi Co, Fe et Cu, M' est Mn et/ou Al, et T est au moins un élément parmi B, Si, S, Cr, Ga, Ge, Mo, Ru, Rh, Pd, Ag, In, Sn, Sb, Bi, P, V, Nb, Ta et W. Dans cette formule, la composition atomique est la suivante : $3,2 \leq a \leq 4,0$ ; $0,4 \leq b \leq 1,5$ ; $0,3 \leq c \leq 0,9$ ; $0 \leq d \leq 0,2$ et $4,5 \leq a + b + c + d \leq 5,6$. Cet alliage est fabriqué par fusion du mélange des éléments dans les proportions ci-dessus, puis refroidi rapidement à une vitesse d'au moins 100°C/s, et enfin traité thermiquement de préférence entre 500°C et 900°C. Dans un premier temps les composants additionnels sont uniformément dispersés dans l'alliage et une phase inter-granulaire à grains fins précipite. Lorsque la somme (a + b + c + d) est en dehors du domaine 4,5-5,6, il y a une augmentation de la quantité de deuxième phase.

Cependant certaines applications requièrent que l'accumulateur soit capable de résister à des températures élevées pendant de longues périodes de repos ou de surcharge permanentes entre les phases de charge et de décharge. Dans ce cas, la durée de vie de l'accumulateur dépendra de l'aptitude de l'alliage hydrurable à résister à la corrosion lors d'un stockage dans un électrolyte alcalin aqueux de concentration élevée.

Le but de la présente invention est de proposer une matière électrochimiquement active qui est un alliage hydrurable possédant une résistance élevée à la corrosion en cyclage, et dont la corrosion en stockage est réduite par rapport aux matériaux connus de l'art antérieur.

L'invention a pour objet une matière électrochimiquement active constituée d'un alliage hydrurable monophasé de structure $CaCu_5$, de formule :

$$Mm\ Ni_a\ Mn_b\ Al_c\ Co_d\ Cr_e$$

où Mm est un mischmetal contenant au moins 50% en poids de La, avec $5,10 \leq (a+b+c+d+e)$, $d \leq 0,55$ et $0,03 \leq e \leq 0,1$.

Pour des raisons de coût, la proportion atomique de Co doit être au plus égale à 0,55, soit un taux de Co inférieur ou égal à 7,5% en poids de l'alliage. Ceci entraîne une baisse de la résistance de l'alliage à la décrépitation. L'augmentation de la stoechiométrie au-delà de 5,10 permet de remédier à cet inconvénient, mais alors la pression de plateau augmente dans une proportion inacceptable pour une utilisation de l'alliage comme matière électrochimiquement active dans une électrode. L'utilisation d'un mischmetal contenant au moins 50% de La combiné à une proportion atomique de Cr telle que $0,03 \leq e \leq 0,1$ permettent de résoudre les inconvénients précités.

L'invention a encore pour objet une matière électrochimiquement active constituée d'un alliage hydrurable monophasé de structure $CaCu_5$, de formule :

$$Mm \, Ni_a \, Mn_b \, Al_c \, Co_d \, Cr_e$$

où Mm est un mischmetal contenant de 50% à 80% en poids de La, avec :

$$3,7 \leq a \leq 4,3$$

$$0,3 \leq b \leq 0,7$$

$$0,1 \leq c \leq 0,4$$

$$d \leq 0,55$$

$$0,03 \leq e \leq 0,1$$

$$5,10 \leq (a+b+c+d+e) \leq 5,40$$

Pour des valeurs de $(a+b+c+d+e)$ supérieures à 5,40 on observe une diminution de la capacité, une augmentation de la pression de plateau et la précipitation de phases secondaires appauvries ou exemptes de mischmetal dans la matrice de structure $CaCu_5$. L'alliage n'est plus monophasé. Pour conserver une résistance suffisante de la corrosion en cyclage, il faut de préférence que $5,15 \leq (a+b+c+d+e) \leq 5,35$ .

Selon la présente invention, Mm est un mischmetal constitué d'un mélange de La, Ce, Nd et Pr. Il contient de 50% à 80% en poids de La, de préférence 50% à 70%, et de préférence encore environ 60%. Le taux de Ce dans le mischmetal ne doit pas être inférieur à 10% en poids pour conserver une résistance suffisante vis à vis de la décrépitation.

La proportion atomique de Mn est telle que $0,3 \leq b \leq 0,7$, et de préférence $0,45 \leq b \leq 0,65$.

La proportion atomique de Al doit être supérieure ou égale à 0,1. En deçà de cette proportion d'Al on constate que la résistance de l'alliage à la corrosion n'est plus suffisante. La proportion atomique de Al est $0,1 \leq c \leq 0,4$, et de préférence $0,15 \leq c \leq 0,25$.

Dans l'alliage selon l'invention, la proportion atomique de Co est $0,25 \leq d \leq 0,55$ , de préférence $0,25 \leq d \leq 0,51$ pour atteindre un coût acceptable, et de préférence encore de $0,35 \leq d \leq 0,45$.

Lors d'essais antérieurs sur cette famille d'alliages, on a observé qu'une proportion atomique de Cr supérieur à 0,1 atome de Cr pour 1 atome de Mm conduisait à de faibles capacités massiques et à une activation lente. La proportion atomique de Cr est telle que $0,03 \leq e \leq 0,1$, et de préférence telle que $0,03 \leq e \leq 0,07$.

Le procédé de fabrication d'une matière électrochimiquement active selon la présente invention comprend les étapes suivantes :

- fusion simultanée des composants de l'alliage hydrurable dans une atmosphère exempte d'oxygène, comme dans un four à induction à atmosphère contrôlée,
- refroidissement rapide du mélange fondu à une vitesse de refroidissement d'au moins $10°C.s^{-1}$,
- recuit de l'alliage dans une atmosphère exempte d'oxygène à des températures comprises entre $900°C$ et $1100°C$. De préférence, la durée de recuit est inférieure ou égale à 16 heures.

Avant réalisation de l'électrode, la matière active obtenue peut être soumise à un traitement de surface à l'aide d'une solution acide ou basique.

Le refroidissement rapide de l'alliage fondu peut être réalisé par exemple par coulée sous forme de plaque dans un moule métallique refroidi, ce qui conduit à une vitesse de refroidissement de l'ordre de $10°C.s^{-1}$. Le broyage peut

être réalisé au moyen d'un broyeur à billes, à rouleaux ou à couteaux, ou encore dans un jet de gaz (jet milling).

L'alliage peut également être obtenu par un procédé d'atomisation gazeuse dans lequel l'alliage fondu est éjecté à travers une buse sous forme de gouttelettes qui se refroidissent au contact d'une atmosphère de gaz inerte. L'alliage est alors obtenu directement sous forme de poudre.

L'alliage peut être également refroidi rapidement en utilisant des procédés de solidification rapide du bain liquide par trempe sur roue (procédé "melt spinning" et dérivés) sous atmosphère inerte. La roue est généralement fabriquée dans un métal bon conducteur thermique comme les alliages de Cu. Le procédé "melt spinning" consiste à projeter par une pression gazeuse le bain fondu sur la roue à travers un orifice circulaire ou une fente allongée (le procédé est dit alors "planar flow casting"). Le procédé "melt overflow", aussi appelé "strip casting", consiste à verser le bain fondu dans un réservoir intermédiaire, dont il s'écoule par débordement et vient au contact de la roue. Ces procédés conduisent à former des rubans ou des paillettes (lorsque l'alliage est fragile) d'épaisseur inférieure ou égale à 100 µm. Ces procédés permettent d'obtenir des vitesses de refroidissement pouvant atteindre $10^6$ °C.s$^{-1}$.

L'invention a aussi pour objet une électrode incluant une matière électrochimiquement active qui est l'alliage hydrurable précédemment décrit. L'électrode comprend un support conducteur et une couche contenant ladite matière active et un liant. Le support conducteur peut être un support bidimensionnel, comme un feuillard plein ou perforé, un métal déployé, une grille ou un tissu, ou bien un support tridimensionnel, comme une mousse ou un feutre. Ce support est recouvert d'une couche contenant la matière électrochimiquement active, un liant et le plus souvent un matériau conducteur, mais aussi des composés de l'yttrium. La couche active peut aussi comporter en faibles quantités des additifs destinés à faciliter la mise en forme de l'électrode, comme un épaississant ou un stabilisateur de texture. L'électrode peut être également soumise à un traitement de surface à l'aide d'une solution acide ou basique avant ou après son introduction dans l'accumulateur.

L'invention a enfin pour objet un générateur électrochimique secondaire, notamment du type nickel-métal hydrurable, comprenant une électrode négative contenant l'alliage hydrurable précédemment décrit, une électrode positive dont la matière électrochimiquement active est un hydroxyde contenant du nickel, un séparateur polymère et un électrolyte aqueux alcalin. L'électrode positive peut être de type fritté ou comporter un support en mousse. Elle peut contenir un hydroxyde à base de nickel partiellement substitué par Co et/ou Zn, un composé du cobalt sous forme de revêtement conducteur et éventuellement un composé de l'yttrium comme $Y_2O_3$. Les deux électrodes sont séparées par un séparateur de polyamide ou de polyoléfine, éventuellement traité par l'acide acrylique ou une polysulfone.

D'autres caractéristiques et avantages de la présente invention apparaîtront au cours de la description suivante de modes de réalisation, donnés à titre illustratif mais nullement limitatif.

Elaboration des alliages :

EXEMPLES 1 A 3

On a fabriqué des alliages hydrurables selon la présente invention de formule Mm Ni$_a$ Mn$_b$ Al$_c$ Co$_d$ Cr$_e$ dans lequel Mm est un mischmetal contenant 60% en poids de La.

Le mischmetal et des autres éléments sont placés dans un creuset et fondus simultanément dans un four à induction dont l'atmosphère est exempte d'oxygène. Puis le mélange est refroidi rapidement (RR) à une vitesse de refroidissement de 10 C.s$^{-1}$ par une coulée sous forme de plaques d'épaisseur 1cm dans un moule en Cu refroidi par de l'eau. Les alliages sont ensuite recuits pendant 16 heures dans une atmosphère exempte d'oxygène sous vide ou sous atmosphère d'argon. L'alliage est enfin réduit en poudre par concassage et broyage mécanique des lingots. Seule la fraction de poudre passant à travers un tamis de 75 µm a été retenue pour l'évaluation des performances. L'analyse de la composition de l'alliage obtenu est effectuée par Spectroscopie ICP (Inductively Coupled Plasma Spectroscopy).

On élabore de la manière décrite ci-dessus des alliages hydrurables I, II et III selon la présente invention respectivement de formule :

$$(I) \qquad Mm\ Ni_{4,04}\ Mn_{0,50}\ Al_{0,20}\ Co_{0,51}\ Cr_{0,05}$$

$$(II) \qquad Mm\ Ni_{4,00}\ Mn_{0,50}\ Al_{0,21}\ Co_{0,40}\ Cr_{0,05}$$

$$(III) \qquad Mm\ Ni_{3,99}\ Mn_{0,31}\ Al_{0,40}\ Co_{0,51}\ Cr_{0,04}$$

Pour les alliages I et II le recuit est effectué à la température de 1000°C, et pour l'alliage III, il est effectué à 1100°C.

EXEMPLES 4 A 6

On a fabriqué des alliages hydrurables selon la présente invention de formule Mm $Ni_a$ $Mn_b$ $Al_c$ $Co_d$ $Cr_e$ dans lequel Mm est un mischmetal contenant 60% en poids de La, de la manière décrite dans les exemples 1 à 3 à l'exception du fait que le refroidissement est effectué par atomisation gazeuse (AG) sous atmosphère d'argon. La vitesse de refroidissement est de l'ordre de $10^{+4}$ °C à $10^{+5}$ °C.s$^{-1}$. Puis les alliages sont ensuite recuits pendant 16 heures dans une atmosphère exempte d'oxygène sous vide ou sous atmosphère d'argon. Cette opération conduit à l'obtention d'une poudre sphérique. Seule la fraction de poudre passant à travers un tamis de 75 μm a été retenue pour l'évaluation des performances.
        De la manière décrite ci-dessus, on élabore des alliages hydrurables IV, V et VI selon la présente invention respectivement de formule

$$(IV) \qquad Mm\ Ni_{3,96}\ Mn_{0,50}\ Al_{0,20}\ Co_{0,51}\ Cr_{0,05}$$

$$(Va\text{-}Vb) \qquad Mm\ Ni_{3,92}\ Mn_{0,40}\ Al_{0,30}\ Co_{0,51}\ Cr_{0,05}$$

$$(VI) \qquad Mm\ Ni_{3,86}\ Mn_{0,30}\ Al_{0,39}\ Co_{0,50}\ Cr_{0,05}$$

Pour les alliages IV et Va le recuit est effectué à la température de 1100°C, et pour les alliages Vb et VI, il est effectué à 900°C.

EXEMPLE 7

A titre de comparaison, on a fabriqué un alliage hydrurable VII de formule Mm $Ni_{3,81}$ $Mn_{0,31}$ $Al_{0,39}$ $Co_{0,50}$ $Cr_{0,06}$, dans lequel Mm est un mischmetal contenant 60% en poids de La, de la manière décrite dans les exemples 1 à 3 à l'exception du fait que le refroidissement est effectué par coulée conventionnelle (CC) en lingotière de diamètre 5cm en acier réfractaire. La vitesse de refroidissement est de l'ordre de 1°C.s$^{-1}$. L'alliage est ensuite recuit pendant 16 heures à 1100°C dans une atmosphère exempte d'oxygène sous atmosphère d'argon.
        L'alliage obtenu n'est pas monophasé ; il est constitué d'une matrice de structure hexagonale de type $CaCu_5$ dans laquelle le Cr précipite sous forme de paillettes.

EXEMPLES 8 A 11

A titre de comparaison, on a fabriqué des alliages hydrurables de formule Mm $Ni_a$ $Mn_b$ $Al_c$ $Co_d$ dans lequel Mm est un mischmetal contenant 60% en poids de La, de la manière décrite dans l'exemple 1.
        On élabore des alliages hydrurables VIII, IX, X, et XI respectivement de formule :

$$(VIII) \qquad Mm\ Ni_{3,80}\ Mn_{0,59}\ Al_{0,20}\ Co_{0,51}$$

$$(IX) \qquad Mm\ Ni_{3,97}\ Mn_{0,61}\ Al_{0,21}\ Co_{0,51}$$

$$(X) \qquad Mm\ Ni_{3,96}\ Mn_{0,61}\ Al_{0,20}\ Co_{0,51}$$

$$(XI) \qquad Mm\ Ni_{3,99}\ Mn_{0,31}\ Al_{0,40}\ Co_{0,50}$$

Pour les alliages VIII et IX le recuit est effectué à la température de 1000°C, pour l'alliage X il est effectué à 1075°C, et pour l'alliage XI il est effectué à 1100°C.

EXEMPLE 12

A titre de comparaison, on a fabriqué un alliage hydrurable XII de formule Mm $Ni_{3,84}$ $Mn_{0,61}$ $Al_{0,21}$ $Co_{0,51}$,

dans lequel Mm est un mischmetal contenant 60% en poids de La, de la manière décrite dans les exemples 4 à 6, le recuit étant effectué à 900°C.

EXEMPLE 13

A titre de comparaison, on a fabriqué un alliage hydrurable XIII contenant de l'yttrium Y de formule $Mm_{0,95}$ $Y_{0,05}$ $Ni_{3,93}$ $Mn_{0,31}$ $Al_{0,39}$ $Co_{0,50}$, dans lequel Mm est un mischmetal contenant 60% en poids de La, de la manière décrite dans les exemples 1 à 3, le recuit étant effectué à 1100°C.

Test de corrosion en stockage (soaking test) :

On introduit 5g de poudre d'alliage hydrurable dans 50ml d'une solution aqueuse de potasse KOH de concentration 8,7N contenue dans un flacon en polyméthylpentène. Le flacon est ensuite rempli d'azote et scellé à l'aide de ruban en polytétrafluoroéthylène PTFE (pour éviter une oxydation par l'air) et placé dans un bain thermostaté à 70 °C pendant 8 jours. Durant cette période, le flacon est continuellement agité.
   L'aluminium contenu dans l'alliage se dissout dans la potasse au fur et à mesure que l'alliage se corrode. La concentration en aluminium de la solution est déterminée par spectroscopie ICP à la fin de la période de stockage. Le taux de corrosion de l'alliage est calculé en rapportant la quantité d'aluminium dans la solution à la quantité d'aluminium contenue initialement dans les 5g d'alliage.

Les résultats de ce test sont regroupés dans le tableau ci-dessous. On a indiqué par Ts le taux de corrosion en stockage exprimé en % d'aluminium dissout.
   Les résultats montrent que le taux de corrosion en stockage des alliages qui ne font pas partie de l'invention est compris entre 1,8% et 2,6%, alors que pour les alliage selon la présente invention il est compris entre 1,2 et 1,7%.

Test de corrosion en cyclage :

Les alliages hydrurables pulvérulents précédemment élaborés sont évalués comme matière électrochimiquement active dans une électrode négative de générateur secondaire à électrolyte alcalin.
   L'électrode négative est constituée d'un mélange de 65% en poids de poudre d'alliage hydrurable, de 30% en poids de poudre de nickel utilisée comme agent conducteur et de 5% en poids de PTFE utilisé comme liant. Le mélange est comprimé sur un support conducteur formé d'un déployé de nickel.
   Bien entendu, on pourra envisager l'utilisation d'un support conducteur d'électrode de nature et de structure différente. Les différents ingrédients entrant dans la réalisation de la pâte, ainsi que leurs proportions relatives, pourront être changés. Notamment des additifs destinés à faciliter la mise en forme de l'électrode, comme un épaississant ou un stabilisateur de texture, pourront y être incorporés dans des proportions mineures.

Les performances électrochimiques des alliages ont été évaluées en accumulateurs ouverts limités par l'électrode négative. Cette électrode négative est isolée de deux électrodes positives au nickel à support en mousse de nickel par un séparateur en polyoléfine et une membrane destinée à empêcher la recombinaison d'oxygène sur l'électrode négative. Ce faisceau est introduit dans un bac en polyéthylène et imprégné de l'électrolyte, constitué d'une solution aqueuse de KOH de concentration 8,7M, pour former un accumulateur Ni-MH. Le cyclage est effectué à température ambiante dans les conditions suivantes :

   une activation de 10 cycles :

-   charge de 16 heures au régime de 0,1lc, où $I_c$ est le courant nécessaire théorique pour décharger l'accumulateur en une heure,
-   repos de 1 heure,
-   décharge au régime de 0,21c jusqu'à une tension de 0,9 Volt,

   suivi d'un cyclage rapide, après une charge de 16 heures au régime 0,1lc :

-   décharge au régime de lc pendant 48 minutes, ce qui représente 80% de profondeur de décharge (DOD)
-   recharge au régime de lc pendant 52 minutes, ce qui correspond à un coefficient de surcharge de 8%.

Après 300 cycles, le taux de corrosion de l'alliage en cyclage est mesuré par dosage par spectroscopie ICP de l'aluminium contenu dans les deux électrodes positives. En effet, l'aluminium de l'alliage corrodé au cours du cyclage est dissout dans l'électrolyte et piégé dans l'électrode positive [P.Bernard, J. Electrochem. Soc., 145 (1998) 456-458]. Le taux de corrosion est calculé en rapportant la quantité d'aluminium insérée dans les électrodes positives à la quantité d'aluminium initialement contenue dans l'alliage de l'électrode négative.

Les résultats de ce test sont regroupés dans le tableau ci-dessous. On a indiqué par C la capacité en mAh par gramme d'alliage à la fin de la phase d'activation, et par Tc le taux de corrosion après 300 cycles exprimé en % d'aluminium dans l'électrode positive.

Les résultats montrent que le taux de corrosion en cyclage des alliages selon la présente invention n'ont pas été augmentés par rapport à ceux mesurés pour les alliages qui ne font pas partie de l'invention, et que la valeur élevée des capacités est conservée.

TABLEAU

| Réf. | Composition | a+b+c+d | Procédé | Ts | C | Tc |
|---|---|---|---|---|---|---|
| I | Mm $Ni_{4,04}$ $Mn_{0,50}$ $Al_{0,20}$ $Co_{0,51}$ $Cr_{0,05}$ | 5,30 | RR-1000°C | 1,3 | 318 | 6,2 |
| II | Mm $Ni_{4,00}$ $Mn_{0,50}$ $Al_{0,21}$ $Co_{0,40}$ $Cr_{0,05}$ | 5,16 | RR-1000°C | 1,5 | 317 | 6,7 |
| III | Mm $Ni_{3,99}$ $Mn_{0,31}$ $Al_{0,40}$ $Co_{0,51}$ $Cr_{0,04}$ | 5,16 | RR-1100°C | 1,7 | 299 | 3,5 |
| IV | Mm $Ni_{3,96}$ $Mn_{0,50}$ $Al_{0,20}$ $Co_{0,51}$ $Cr_{0,05}$ | 5,23 | AG-1100°C |  |  |  |
| Va | Mm $Ni_{3,92}$ $Mn_{0,40}$ $Al_{0,30}$ $Co_{0,51}$ $Cr_{0,05}$ | 5,18 | AG-1100°C |  |  |  |
| Vb | Mm $Ni_{3,92}$ $Mn_{0,40}$ $Al_{0,30}$ $Co_{0,51}$ $Cr_{0,05}$ | 5,18 | AG-900°C |  |  |  |
| VI | Mm $Ni_{3,86}$ $Mn_{0,30}$ $Al_{0,39}$ $Co_{0,50}$ $Cr_{0,05}$ | 5,10 | AG- 900°C | 1,2 | 308 | 7,4 |
| VII | Mm $Ni_{3,81}$ $Mn_{0,31}$ $Al_{0,39}$ $Co_{0,50}$ $Cr_{0,06}$ | 5,07 | CC-1100°C | 2,2 | 301 | 5,0 |
| VIII | Mm $Ni_{3,80}$ $Mn_{0,59}$ $Al_{0,20}$ $Co_{0,51}$ | 5,11 | RR-1000°C | 2,4 | 324 | 7,2 |
| IX | Mm $Ni_{3,97}$ $Mn_{0,61}$ $Al_{0,21}$ $Co_{0,51}$ | 5,30 | RR-1000°C | 2,6 | 306 | 7,1 |
| X | Mm $Ni_{3,96}$ $Mn_{0,61}$ $Al_{0,20}$ $Co_{0,51}$ | 5,28 | RR 1075°C | 2,3 | 307 | 7,6 |
| XI | Mm $Ni_{3,99}$ $Mn_{0,31}$ $Al_{0,40}$ $Co_{0,50}$ | 5,20 | RR-1100°C | 2,4 | 286 | 1,2 |
| XII | Mm $Ni_{3,84}$ $Mn_{0,61}$ $Al_{0,21}$ $Co_{0,51}$ | 5,17 | AG- 900°C | 1,8 | 321 | 8,6 |
| XIII | $Mm_{0,95}$ $Y_{0,05}$ $Ni_{3,93}$ $Mn_{0,31}$ $Al_{0,39}$ $Co_{0,50}$ | 5,13 | RR-1100°C | 1,8 | 298 | 4,1 |

EP 1 179 868 A1

**Revendications**

1.  Matière électrochimiquement active constituée d'un alliage hydrurable monophasé de structure CaCu$_5$, de formule

$$Mm\ Ni_a\ Mn_b\ Al_c\ Co_d\ Cr_e,$$

où Mm est un mischmetal contenant au moins 50% en poids de La, avec

$$5,10 \leq (a+b+c+d+e),$$

$$d \leq 0,55 ,$$

$$0,03 \leq e \leq 0,1.$$

2.  Matière active selon la revendication 1, dans laquelle Mm est un mischmetal contenant de 50% à 80% en poids de La, avec

$$3,7 \leq a \leq 4,3$$

$$0,3 \leq b \leq 0,7$$

$$0,1 \leq c \leq 0,4$$

$$d \leq 0,55$$

$$0,03 \leq e \leq 0,1$$

$$5,10 \leq (a+b+c+d+e) \leq 5,40$$

3.  Matière active selon l'une des revendications 1 et 2, dans laquelle Mm est un mischmetal contenant de 50% à 70% en poids de La.

4.  Matière active selon l'une des revendications précédentes, dans laquelle $5,15 \leq (a+b+c+d+e) \leq 5,35$.

5.  Matière active selon l'une des revendications précédentes, dans laquelle $0,45 \leq b \leq 0,65$.

6.  Matière active selon l'une des revendications précédentes, dans laquelle $0,15 \leq c \leq 0,25$.

7.  Matière active selon l'une des revendications précédentes, dans laquelle $0,25 \leq d \leq 0,51$.

8.  Matière active selon la revendication 7 dans laquelle $0,35 \leq d \leq 0,45$.

9.  Matière active selon l'une des revendications précédentes, dans laquelle $0,03 \leq e \leq 0,07$.

10. Procédé de fabrication d'une matière électrochimiquement active selon l'une des revendications 1 à 9, comprenant les étapes suivantes :

    -   fusion simultanée des composants de l'alliage hydrurable dans une atmosphère exempte d'oxygène,
    -   refroidissement rapide du mélange fondu à une vitesse de refroidissement d'au moins 10 C.s-1,
    -   recuit de l'alliage dans une atmosphère exempte d'oxygène à des températures comprises entre 900°C et 1100°C.

**11.** Procédé selon la revendication 10, dans lequel la durée de recuit est inférieure ou égale à 16 heures.

**12.** Electrode incluant une matière électrochimiquement active selon l'une des revendications 1 à 9, comportant un support conducteur et une couche contenant ladite matière active et un liant.

**13.** Générateur électrochimique secondaire comprenant une électrode négative selon la revendication 12, une électrode positive dont la matière électrochimiquement active est un hydroxyde contenant du nickel, un séparateur polymère et un électrolyte aqueux alcalin.

# EP 1 179 868 A1

Office européen
des brevets

**RAPPORT DE RECHERCHE EUROPEENNE**

Numéro de la demande

EP 01 40 2059

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | PATENT ABSTRACTS OF JAPAN vol. 1996, no. 02, 29 février 1996 (1996-02-29) -& JP 07 268519 A (TOSHIBA CORP), 17 octobre 1995 (1995-10-17) * abrégé; tableaux 2,6 * | 1 | H01M4/38 C22F1/02 |
| A | PATENT ABSTRACTS OF JAPAN vol. 1997, no. 06, 30 juin 1997 (1997-06-30) -& JP 09 031573 A (MITSUI MINING &AMP;SMELTING CO LTD), 4 février 1997 (1997-02-04) * abrégé; tableau 1 * | 1 | |
| D,A | US 5 512 385 A (KOMORI KATSUNORI ET AL) 30 avril 1996 (1996-04-30) * tableau 2 * | 1 | |
| D,A | US 5 753 386 A (HASHIMOTO KEISUKE ET AL) 19 mai 1998 (1998-05-19) * tableau 1 * | 1 | DOMAINES TECHNIQUES RECHERCHES (Int.Cl.7) |
| A | EP 0 271 043 A (MATSUSHITA ELECTRIC IND CO LTD) 15 juin 1988 (1988-06-15) * page 18 * | 1 | H01M C22F |
| A | PATENT ABSTRACTS OF JAPAN vol. 1999, no. 04, 30 avril 1999 (1999-04-30) -& JP 11 025964 A (HITACHI MAXELL LTD), 29 janvier 1999 (1999-01-29) * abrégé * | 1 | |

-/--

Le présent rapport a été établi pour toutes les revendications

| Lieu de la recherche | Date d'achèvement de la recherche | Examinateur |
|---|---|---|
| LA HAYE | 12 décembre 2001 | Gregg, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

11

# EP 1 179 868 A1

| | Office européen des brevets | **RAPPORT DE RECHERCHE EUROPEENNE** | Numéro de la demande<br>EP 01 40 2059 |
|---|---|---|---|

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (Int.Cl.7) |
|---|---|---|---|
| A | PATENT ABSTRACTS OF JAPAN<br>vol. 1998, no. 11,<br>30 septembre 1998 (1998-09-30)<br>-& JP 10 152739 A (MITSUI MINING<br>&AMP;SMELTING CO LTD; MATSUSHITA ELECTRIC<br>IND CO LTD), 9 juin 1998 (1998-06-09)<br>* abrégé * | 1 | |
| | | | **DOMAINES TECHNIQUES<br>RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 12 décembre 2001 | Gregg, N |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
 
& : membre de la même famille, document correspondant

EPO FORM 1503 03.82 (P04C02)

**EP 1 179 868 A1**

## ANNEXE AU RAPPORT DE RECHERCHE EUROPEENNE
## RELATIF A LA DEMANDE DE BREVET EUROPEEN NO.

EP 01 40 2059

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-12-2001

| Document brevet cité au rapport de recherche | | Date de publication | Membre(s) de la famille de brevet(s) | | Date de publication |
|---|---|---|---|---|---|
| JP 07268519 | A | 17-10-1995 | AUCUN | | |
| JP 09031573 | A | 04-02-1997 | AUCUN | | |
| US 5512385 | A | 30-04-1996 | JP | 2965475 B2 | 18-10-1999 |
| | | | JP | 7286225 A | 31-10-1995 |
| US 5753386 | A | 19-05-1998 | JP | 9097607 A | 08-04-1997 |
| | | | JP | 9265982 A | 07-10-1997 |
| | | | DE | 19639440 A1 | 10-04-1997 |
| EP 0271043 | A | 15-06-1988 | JP | 1054669 A | 02-03-1989 |
| | | | JP | 2532498 B2 | 11-09-1996 |
| | | | JP | 1057568 A | 03-03-1989 |
| | | | JP | 2733227 B2 | 30-03-1998 |
| | | | JP | 7056800 B | 14-06-1995 |
| | | | JP | 63146353 A | 18-06-1988 |
| | | | JP | 7056801 B | 14-06-1995 |
| | | | JP | 63146354 A | 18-06-1988 |
| | | | DE | 3776300 D1 | 05-03-1992 |
| | | | EP | 0271043 A1 | 15-06-1988 |
| | | | US | 4837119 A | 06-06-1989 |
| JP 11025964 | A | 29-01-1999 | AUCUN | | |
| JP 10152739 | A | 09-06-1998 | AUCUN | | |

EPO FORM P0460

Pour tout renseignement concernant cette annexe : voir Journal Officiel de l'Office européen des brevets, No.12/82

13